(19) Europäisches Patentamt
European Patent Office
Office européen des brevets

(11) Numéro de publication : **0 349 564 B1**

(12) # FASCICULE DE BREVET EUROPEEN

(45) Date de publication du fascicule du brevet : **02.01.92 Bulletin 92/01**

(51) Int. Cl.$^5$ : **C07F 9/547**

(21) Numéro de dépôt : **88902501.1**

(22) Date de dépôt : **07.03.88**

(86) Numéro de dépôt international : **PCT/FR88/00131**

(87) Numéro de publication internationale : **WO 88/07048 22.09.88 Gazette 88/21**

(54) **MACROCYCLES ORGANIQUES PHOSPHORES, PROCEDE DE FABRICATION ET APPLICATIONS.**

(30) Priorité : **13.03.87 FR 8703610**

(43) Date de publication de la demande : **10.01.90 Bulletin 90/02**

(45) Mention de la délivrance du brevet : **02.01.92 Bulletin 92/01**

(84) Etats contractants désignés : **AT BE CH DE FR GB IT LI LU NL SE**

(56) Documents cités :
**Journal of General Chemistry of the USSR, Vol. 45, No. 6, part 2, June 1975, Plenum Publishing Corp., (New York, US), A.F. Grapov et al.: "Tetrazaphosphepine derivatives", page 1362, see the whole document; cited in the the application**
**Journal of General Chemistry of the USSR, Vol. 52, No. 5, part 2, May 1982, Plenum Publishing Corp., (New York, US), T.N. Kudrya et al.: "Phosphorus-containing crowns.IV. New 17-membered macrocyclic polyethers", pages 952-954; see the whole document cited in the application**

(73) Titulaire : **CENTRE NATIONAL DE LA RECHERCHE SCIENTIFIQUE (CNRS)**
**15, Quai Anatole France**
**F-75700 Paris Cedex 07 (FR)**
Titulaire : **INSTITUT NATIONAL POLYTECHNIQUE DE TOULOUSE (I.N.P.T.)**
**Place des Hauts-Murats B.P. 354**
**F-31006 Toulouse Cédex (FR)**

(72) Inventeur : **MAJORAL, Jean-Pierre**
**23, rue de Salas**
**F-31520 Ramonville-Saint-Agne (FR)**
Inventeur : **BADRI, Meryam**
**8, rue Colbert Bât. K**
**F-31400 Toulouse (FR)**
Inventeur : **GARRIGUES, Bernard**
**13, rue du Panoramique**
**F-31650 Saint-Orens-de-Gameville (FR)**
Inventeur : **RIGAL, Luc**
**12, rue de Bigorre**
**F-31130 Balma (FR)**
Inventeur : **GASET, Antoine**
**75, allée de Brienne**
**F-31000 Toulouse (FR)**
Inventeur : **DELMAS, Michel**
**30, résidence des Amazones**
**F-31320 Auzeville-Tolosane (FR)**

(74) Mandataire : **Barre, Philippe**
**Cabinet Barre-Gatti-Laforgue 95 rue des Amidonniers**
**F-31069 Toulouse Cédex (FR)**

EP 0 349 564 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne de nouveaux macrocycles organiques phosphorés et leur procédé de fabrication. Elle s'étend à des applications spécifiques de certains de ces macrocycles.

On sait que les macrocycles organiques sont des enchâinement hydrocarbonés refermés sur eux-mêmes selon un agencement géométrique, symétrique ou non. Par "macrocycle", on entend des composés cycliques possédant au minimum 14 atomes dans la chaîne. L'intérêt de ces macrocycles réside dans leurs propriétés biologiques (notamment antibiotique) et surtout, dans leurs propriétés complexantes vis-à-vis de cations, permettant en particulier de véhiculer ces dernier d'un milieu à un autre.

Une famille particulière de ces macrocycles réside dans les macrocycles organiques phosphorés qui, grâce à la présence de phosphore ou de groupements phosphorylés ou thiophosphorylés, ont des propriétés complexantes accentuées et des propriétés sélectives, permettant de complexer des cations difficilement complexables par les autres macrocycles. Cet effet provient des caractéristiques stériques et surtout des doublets libres apportés soit par les phosphores, soit par les groupements phosphorylés ou thiophosphorylés.

Toutefois, très peu de macrocycles phosphorés ont pu à l'heure actuelle être préparés, les procédés de synthèses connus étant limités à des composés bien spécifiques ; de plus, ces procédés sont de mises en oeuvre délicates et très onéreuses.

On connaît par exemple un procédé de synthèse de macrocycles phosphorés, dérivés des éthers couronnes, qui consiste à faire réagir un polyol avec un composé halogéné phosphoré ; ce procédé est illustré dans les publications suivantes :

– Raevskii, O.A ; Solotnov, A.F. ; Shtepanek A.S ; Kudrya T.N. ; Izv. Akad.Nauk SSSR Ser.Khim 1984, (4) p 797-803,

– Kudrya, T.N. ; Chaikovskaya A.A. ; Roshkova, Z.Z., Pinchuk A.M. Zh. Obshch.Khim 1982, 52 (5) p 952-4 ou p 1092-5,

– Golovatyi, V.G. ; Korol E.N. Teor Eksp.Khim 1981, 17 (5) p 849-51,

– Kirsanov, A.V. ; Zasorina, V.A. ; Shtepanek A.S., Pinchuk A.M. Dokl.Akad.Nauk SSSR 1981, 259, p 1112-13,

– Ciampolini, M. ; Dapporto, P. ; Nardi, N. ; Zanobini F. ; J.Chem. Soc. Chem. Comm. 1980, (4) p 177-8,

– Yatsimirskii, K.B. ; Kabachinck, M.I. ; Sinyavskaya E.I. ; Konstantinovskaya, M.A. ; Medved, T. Ya ; Polikarpov, Yu.M. ; Bodrin, G.V. Zh. Neorg.Khim 1980, 25 (7) p 1788-92,

– Kaplan, L.J. ; Weisman G.R. ; Gram, D.J. J. Org. Chem. 1979 44 (13) p 2226-33,

– Yatsimirskii, K.B. ; Bidzilya, V.A. ; Golovkova, L.P. ; Shtepanek, A.S. Dokl. Akad. Nauk SSSR 1979, 244 (5) p 1142-5,

– Newkome, G'.R. ; Hager, D.C. J. Am. Chem. Soc. 1978, 100 (17) p 5567-8,

– Kudrya, T.N. ; Shtepanek, A.S. ; Kirsanov, A.V. Zh. Obshch.Khim 1978, 48 (4) p 927.

Ce procédé s'accompagne nécessairement d'une phase finale de séparation des macrocycles par rapport aux composés de départ, qui comporte de nombreuse étapes, est très délicates et onéreuse et conduit à un rendement global très faible.

Un autre procédé consiste à cycliser des amines tertiaires halogénées avec des phosphines métallés pour obtenir un macrocycle saturé : "Ciampolini, M. ; Nardi, N. ; Zanobini, F. ; Cini, R. ; Orioli P.L. Inorg. Chim. Acta. 1983 76 (1) L17-L19". Un tel macrocycle possède une réactivité moindre dans les applications de complexation. Sa fabrication fait appel à des composés de départ difficiles d'accès et de préparation onéreuse.

Un autre procédé permet de préparer des macrocycles polyoxygénés phosphorés, par une succession de réactions d'addition et d'élimination : "Christol. H. ; Gustau, H.J. ; Fallouh, F. ; Hullot, P. ; Tetrahedron Lett. 1979, (28) p 2591-4". Cette préparation est très longue et extrêmement complexe (7 étapes minimum) et son rendement est limité.

Un autre procédé permet de préparer des macrocycles dissymétriques à un seul phosphore, en faisant réagir du dipyridyl-phényloxyde de phosphine avec des composés alcoxides : "Newkome, G.R. ; Hager, D.V. ; J. Am. Chem. Soc. 1978, 100 (17) p 5567-8". Le composé phosphoré de départ est très difficile d'accès.

Tous ces macrocycles ont été synthétisés en laboratoire pour étude et aucun ne fait actuellement l'objet d'une fabrication industrielle en raison de leur coût extrêmement élevé et de leurs procédés de fabrication très complexes. En outre, aucun de ces macrocycles ne possède le motif N - N - P - N - N qui, comme l'ont mis en évidence les inventeurs, apporte une sélectivité dans la complexation, extrêmement intéressante dans de nombreuses applications.

Il est à noter qu'on sait par ailleurs fabriquer des hétérocycles (c'est-à-dire des enchaînements à moins de 14 atomes et généralement de l'ordre de 6 à 8 atomes) qui possède un motif N - N - P - N - N. Toutefois, ces composés ne sont pas des macrocycles et leur taille est trop réduite pour présenter les propriétés spécifiques des macrocycles et en particulier les propriétés de complexation. Certaines fabrications de ces hétérocycles sont effectuées par des réactions de condensation traditionnelles entre deux réactifs, conduisant à la fixation classique d'une molécule d'un des réactifs sur une molécule de l'autre réactif. Par exemple, l'article suivant : "Journal of General Chemistry of the USSR vol. 45 n° 6 partie 2, juin 75 p 1362" décrit une telle réaction entre une molécule de dicétone 1-2 et une molécule de phosphohydrazide. Ce type de réaction bien connu en chimie conduit à des hétérocycles et ne fournit aucun enseignement pour la fabrication de macrocycles qui font partie d'un domaine de la chimie totalement différent.

La présente invention se propose de fournir un nouveau procédé de fabrication de macrocycles organiques phosphorés (c'est-à-dire à au moins 16 atomes dans la chaîne) possédant au moins deux motifs N - N - P - N - N. Elle vise à fournir un procédé de mise en oeuvre simple, utilisant des composés de départ disponibles sur le marché à des prix modérés, et conduisant à une séparation extrêmement facile des macrocycles synthétisés.

Un autre objectif est d'atteindre des rendements très élevés, supérieurs à 80 % (le rendement étant défini comme le rapport de la quantité de macrocycles obtenus à la quantité des réactifs de départ).

Un autre objectif est de permettre de synthétiser une famille de macrocycles très diversifiée mais possédant toujours au moins deux motifs N - N - P - N - N, en vue de fournir grâce à un large choix de composés la possibilité de moduler les propriétés en fonction de l'application.

Un autre objectif est de fournir des macrocycles phosphorés susceptibles de présenter soit des propriétés complexantes accrues (nombre beaucoup plus élevé de corps complexés, stabilité accrue des complexes formés), soit de nouvelles propriétés.

A cet effet, le procédé conforme à l'invention pour fabriquer de nouveaux macrocycles organiques phosphorés consiste à faire réagir des molécules de phosphohydrazide avec des molécules de dialdéhyde ou de dicétone dont les fonctions carbonyles sont séparées par au moins un atome de carbone, de formule générale

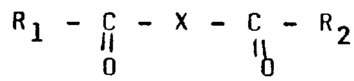

où X est un atome de carbone ou un groupement ou enchaînement carboné, et $R_1$ et $R_2$ un atome d'hydrogène ou un groupement ou enchaînement hydrocarboné, lesdites molécules étant amenées à réagir en les mélangeant dans un solvant apte à dissoudre chacune d'elles, de façon à précipiter des macrocycles comprenant un nombre pair de synthons au moins égal à 4, chaque synthon correspondant à une molécule succédant dans la chaîne à un synthon correspondant à l'autre molécule.

La mise en présence des deux types de molécules sus-évoquées dans un solvant donne de façon inattendue une réaction de pontage entre au moins 4 molécules et conduit à un assemblage d'au moins 2 molécules d'un des types et d'au moins 2 molécules de l'autre type, la nature chimique des deux types de molécules en présence fournissant au moins deux motifs N - N - P - N - N dans la chaîne fermée. Ce phénomène particulier, surprenant pour l'homme du métier, peut être interprété en considérant les modifications d'ordre stérique et électronique induites par la présence du radical X entre les deux groupes carbonyles de la molécule dialdéhydique ou dicétonique, et par la présence du groupement phosphoré de la molécule de phosphohydrazide.

Le mélange peut être effectué à température ambiante sous agitation ; il est également possible de ralentir et donc régulariser la précipitation par un léger refroidissement du milieu (température de l'ordre de 0° C).

On observe une précipitation spontanée du macrocycle formé qui peut être ensuite facilement isolé, par exemple par filtration et purifié par recristallisation, avec un séchage final.

Une telle mise en oeuvre en une seule étape, à froid, est extrêmement simple et peu coûteuse. Les deux composés de départ sont facilement accessibles, soit directement disponibles sur le marché à prix modérés, soit par préparation par des méthodes connues (en particulier on pourra se reporter à la publication suivante pour la préparation des phosphahydrazides : "MAJORAL J.P., KRAEMER Raymond, NAVECH J., MATHIS F., Tétrahédron n° 32, p 2633 et suivantes, 1976". La séparation des macrocycles obtenus qui sont seuls à précipiter dans le milieu liquide est elle-même une opération simple et peu coûteuse. Les rendements observés sont compris entre 80 et 95 %.

De nombreux macrocycles possédant au moins deux motifs N - N - P - N - N peuvent être fabriqués par le procédé de l'invention, en raison de la très grande variété de substituants possibles dans les molécules de départ.

Selon un mode de mise en oeuvre préféré, on utilise les molécules de départ suivantes :

– molécules de dialdéhyde ou de dicétone :

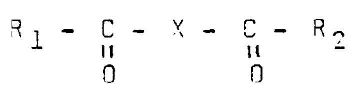

dans lesquelles X est un groupement choisi parmi les suivants : aryle, furyle, alkyle, phénoxyle, pyridyle, $R_1$ et $R_2$ sont un atome ou un groupement choisi parmi les suivants : hydrogène, aryle, furyle, alkyle, phénoxyle,

– molécules de phosphodihydrazide : $R_3P(Y)(NR_4NH_2)_2$, dans lesquelles $R_3$ est un hydrogène ou un groupement ou enchaînement hydrocarboné, en particulier un atome ou un groupement choisi parmi les suivants : hydrogène, halogène, aryle, alkyle, furfuryle, amino, hydrazino, $R_4$ est un hydrogène ou un groupement ou enchaînement hydrocarboné, en particulier un atome d'hydrogène ou un groupement alkyle, Y un atome d'oxygène, de soufre, de sélénium, un doublet libre, un métal ou un groupement azoté.

Pour obtenir un bon rendement, les mélanges sont effectués dans des proportions stoechiométriques.

L'invention s'étend, en tant que produit nouveau, au nouveau macrocycle organique phosphoré, fabricable par le procédé sus-évoqué, de structure moléculaire suivante :

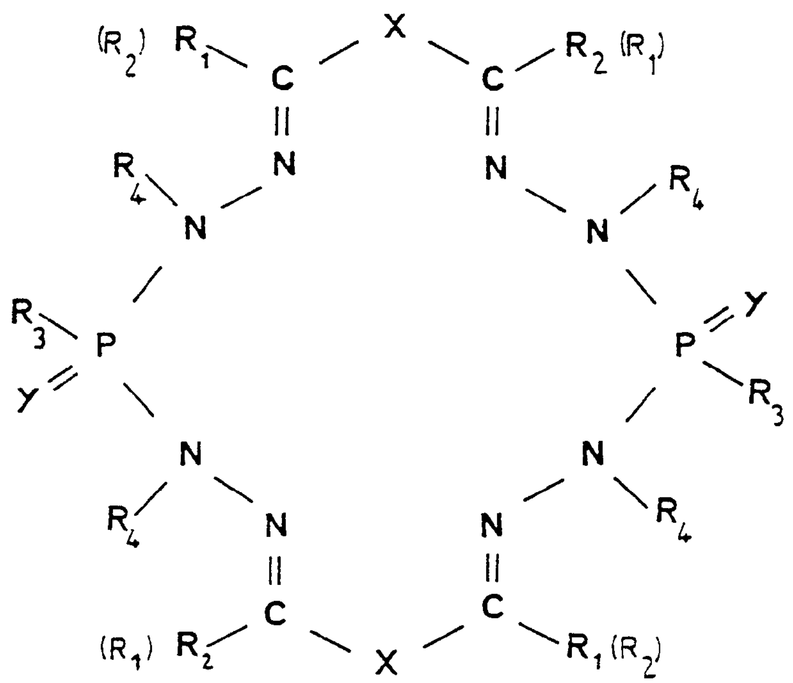

où X est un groupement ou un enchaînement hydrocarboné, $R_1$, $R_2$ et $R_4$ sont un atome d'hydrogène ou un groupement ou enchaînement hydrocarboné, $R_3$ un atome d'hydrogène ou un groupement ou enchaînement hydrocarboné ou azoté, et Y un atome d'oxygène, de soufre, de sélénium, un doublet libre, un métal ou un groupement azoté dans lequel l'azote est doublement lié au phosphore.

Cette famille de macrocycles possède des propriétés complexantes remarquables en raison de sa structure cyclique et de la présence d'atomes porteurs de doublets libres dans les motifs N - N - P - N - N et, le cas échéant, de la présence de groupement anionique (par un choix approprié de X) ; ces macrocycles peuvent en particulier être utilisés pour piéger de petites molécules de dimensions approximativement comprises entre 0,05 et 5 nanomètres (méthanol, chloroforme, dichlorométhane... ou pour piéger des cations notamment métalliques ou organiques (sodium, potassium, ammonium, baryum, plomb, chrome...). La complexation est particulièrement efficace au moyen des macrocycles conformes à l'invention, à la différence des macrocycles phosphorés décrits dans la littérature. Les atomes, radicaux ou groupements X, $R_1$, $R_2$ $R_3$ et $R_4$ peuvent être en particulier constitués par les espèces évoquées précédemment.

Il est à noter que la complexation sera généralement effectuée directement à partir du macrocycle préalablement préparé. Toutefois, on a mis en évidence qu'il est également possible d'obtenir la complexation en mettant en oeuvre le procédé de fabrication de l'invention en présence de molécules ou cations à piéger. On observe alors la formation du macrocycle avec fixation sur celle-ci de la molécule ou du cation. Bien entendu, le procédé de l'invention s'étend aussi bien à la préparation des macrocycles libres qu'à celle des macrocycles directement complexés.

Les macrocycles suivants seront préférés en pratique en raison de la facilité d'accès des deux composés de départ :

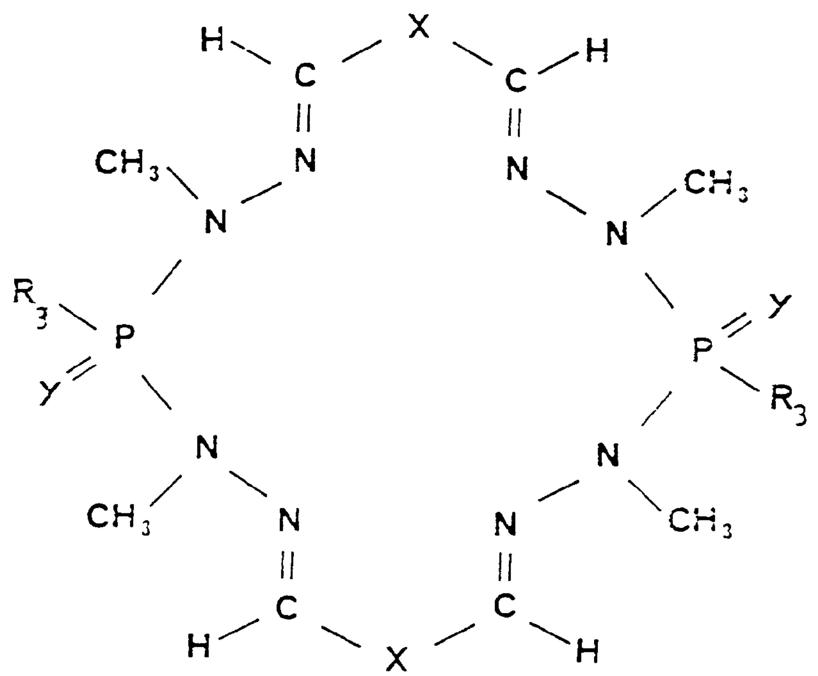

où $R_3$ est un groupement aryle, alkyle, amino ou hydrazino, Y est un atome d'oxygène ou de soufre et X est un groupement aryle ou furyle.

Les exemples qui suivent illustrent le procédé de l'invention, les macrocycles obtenus et leurs propriétés.

EXEMPLE 1

Préparation des réactifs de départ

La synthèse de la bis (méthylhydrazino) phényl thiophosphine est réalisée au moyen d'une solution chloroformique (50 ml) de sulfure de phényl dichlorophosphine (0,1 mole) qui est ajoutée goutte à goutte, sous agitation, à température ambiante à une solution chloroformique (50 ml) de méthylhydrazine (0,4 mole). L'agitation est maintenue pendant 3 heures. Le chloroforme est ensuite éliminé dans le vide de la trompe à eau. Le résidu huileux est repris à chaud par le mélange benzène-hexane (1/2). Les cristaux obtenus après refroidissement sont recristallisés dans le même mélange. Rendement 90 %, point de fusion 95-96° C.

Les aldéhydes utilisés dans les exemples suivants ont été acquis sur le marché auprès de la Société "ALDRICH" ; le furanne dicarboxaldéhyde-2,5 utilisé au présent exemple a été préparé selon le mode opératoire suivant.

1,6 g d'hydroxyméthylfurfural (Référence "ALDRICH H4,080-7") est mis en solution dans un mélange constitué par 50 ml de diméthylsulfoxide (D.M.S.O.) et 50 ml de méthylisobutylcétone (M.I.B.C.) dans un réacteur de 250 ml muni d"une colonne déshydratante de chlorure de calcium sec et d'un thermomètre. 4 g de dicyclohexylcarbodiimide (Référence "ALDRICH D8,000-2") sont ensuite additionnés avec 0,25 g d'acide orthophosphorique en solution dans 2 ml de D.M.S.O.. La réaction démarre après quelques minutes, ce qui se traduit par une augmentation de température, une précipitation du dicyclohexylurée, et un dégagement de diméthylsulfure.

Après quatre heures d'agitation, ce précipité est filtré et lavé avec 40 ml de M.I.B.C.. Le D.M.S.O. est extrait de la phase organique récupérée par 100 ml d'eau. Après décantation et séparation des deux phases, on évapore le M.I.B.C. qui forme l'essentiel de la phase organique. Le furannedicarboxaldéhyde,2-5 précipité et est obtenu pur avec un rendement de 90 %.

Fabrication du macrocycle

- 0,008 mole de furanne de dicarboxaldéhyde 2-5 est dissous dans 45 ml de méthanol,
- 0,008 mole de bis (méthylhydrazino) phénylthiophosphine est dissout dans 45 ml de méthanol.

Ces deux solutions sont mélangées sous agitation goutte à goutte à température ambiante dans 30 ml de méthanol. Une fois l'addition terminée, l'agitation est maintenue pendant une heure (environ) à température

ambiante.

Le macrocycle formé précipite dans le milieu réactionnel sous forme d'une poudre jaune clair. Il est séparé par simple filtration et purifié par lavage au reflux du méthanol.

Le rendement pondéral est de 95 %.

Ce macrocycle a été caractérisé par spectrométrie de masse, par micro-analyse, par ses spectres de résonance magnétique nucléaire du phosphor et du proton et par spectrographie infra-rouge. Il présente la structure suivante :

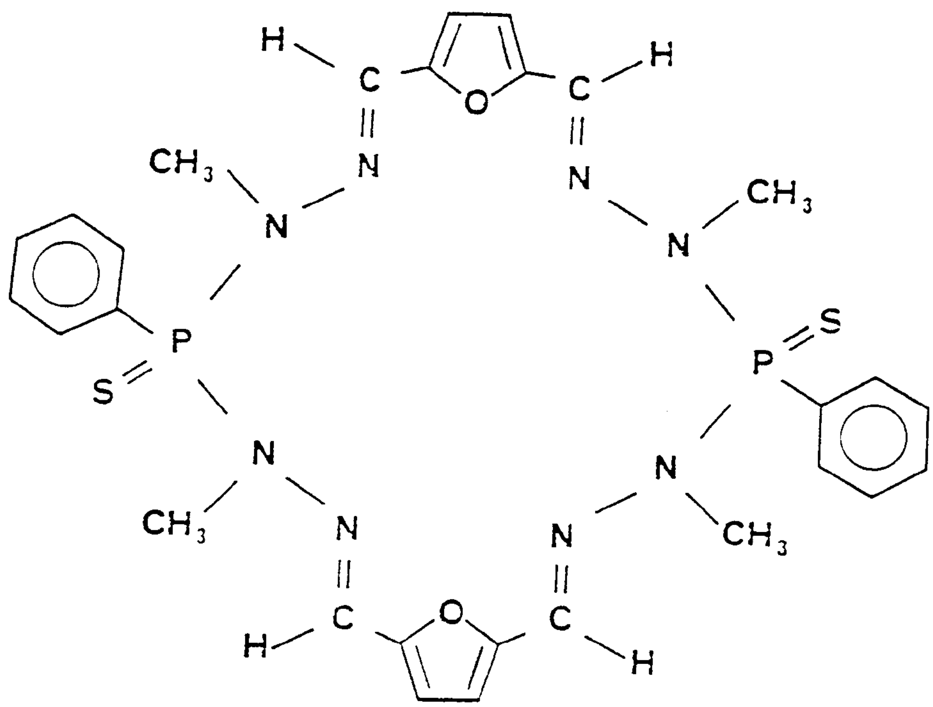

Le pic moléculaire (masse moléculaire) fourni par le spectromètre de masse est de 636 ; le macrocycle possède 20 atomes dans le cycle.

EXEMPLE 2

Le même mode opératoire que pour l'exemple 1 (mêmes quantités) est utilisé avec les deux composés de départ :

– phényl dicarboxaldéhyde 1-3,

– bis (méthylhydrazino) phénylthiophosphine.

Le macrocycle obtenu présente la structure suivante :

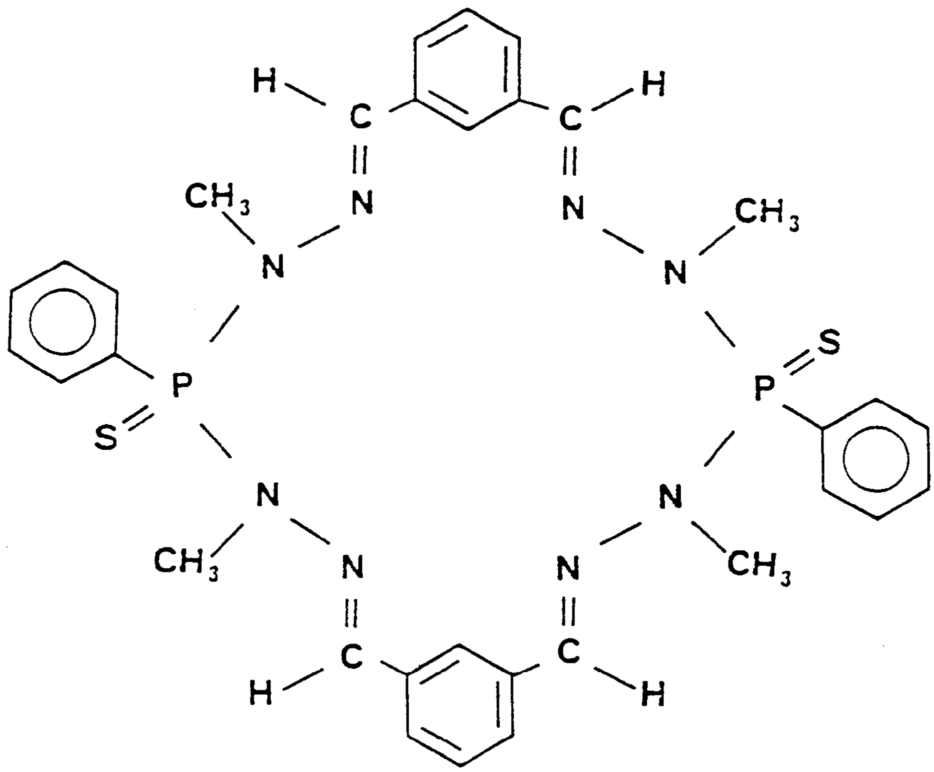

Le rendement est de 80 %. La masse moléculaire est de 656. Le macrocycle possède 20 atomes dans le cycle.

EXEMPLE 3

Même mode opératoire :

- phényl dicarboxaldéhyde 1-4,
- bis (méthylhydrazino) phénylthiophosphine.

Le macrocycle obtenu présente la structure suivante :

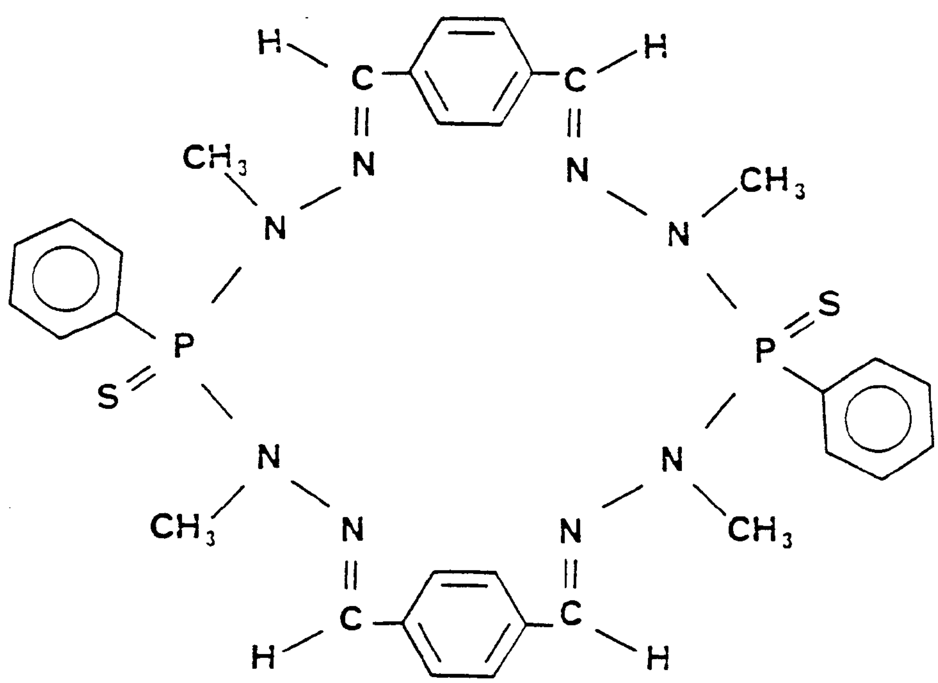

Le rendement est de 80 %. La masse moléculaire est de 656. Le macrocycle possède 22 atomes dans le cycle.

EXEMPLE 4

Même mode opératoire :
- pyridyl dicarboxaldéhyde 2-6,
- bis (méthylhydrazino) phénylthiophosphine.

Le macrocycle obtenu présente la structure suivante :

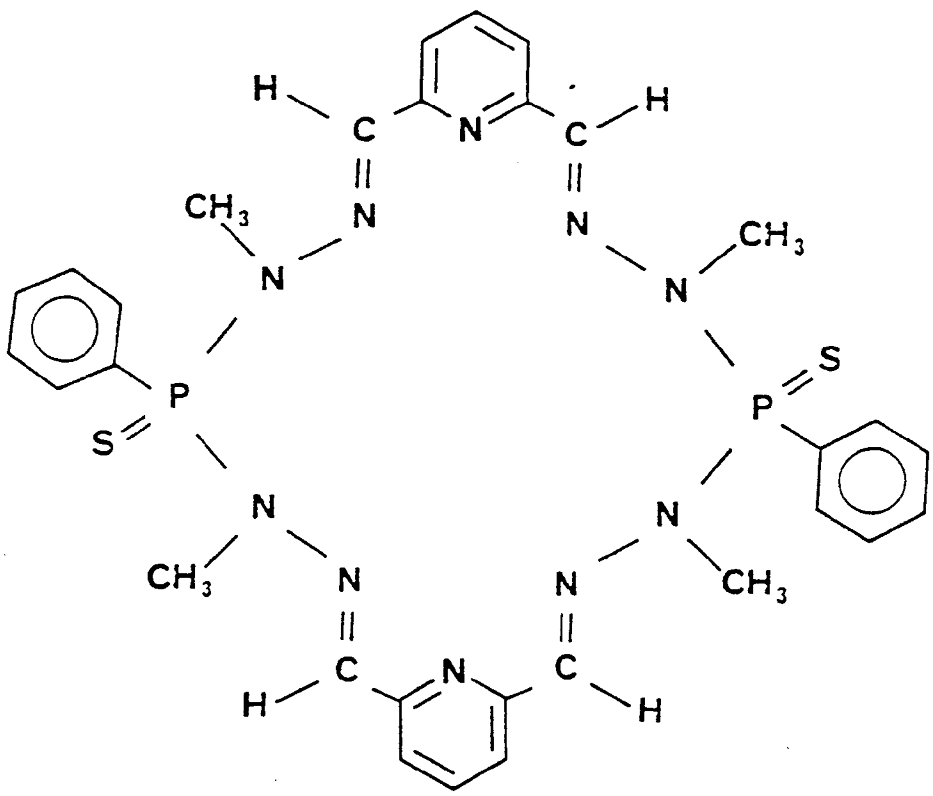

Le rendement est de 85 %. La masse moléculaire est de 658. Le macrocycle possède 20 atomes dans le cycle.

EXEMPLE 5

La synthèse de la bis (méthylhydrazino) phényl oxyde de phosphine est réalisée au moyen d'une solution chloroformique (50 ml) d'oxyde de phényldichlorophosphine (0,1 mole) qui est ajoutée goutte à goutte sous agitation à température ambiante à une solution chloroformique (50 ml) de méthylhydrazine (0,4 mole). L'agitation est maintenue pendant 3 heures. Le chloroforme est ensuite éliminé dans le vide de la trompe à eau. Le résidu huileux est repris à chaud par le mélange benzène-hexane (1/2). Les cristaux obtenus après refroidissement sont recristallisés dans le même mélange. Rendement 80 %, point de fusion 125-126° C.

Préparation du macrocycle

Même mode opératoire qu'aux exemples précédents avec les composés de départ suivants :
- furanne dicarboxaldéhyde 2-5,
- bis (méthylhydrazino) phényloxide de phosphine.

Le macrocycle obtenu présente la structure suivante :

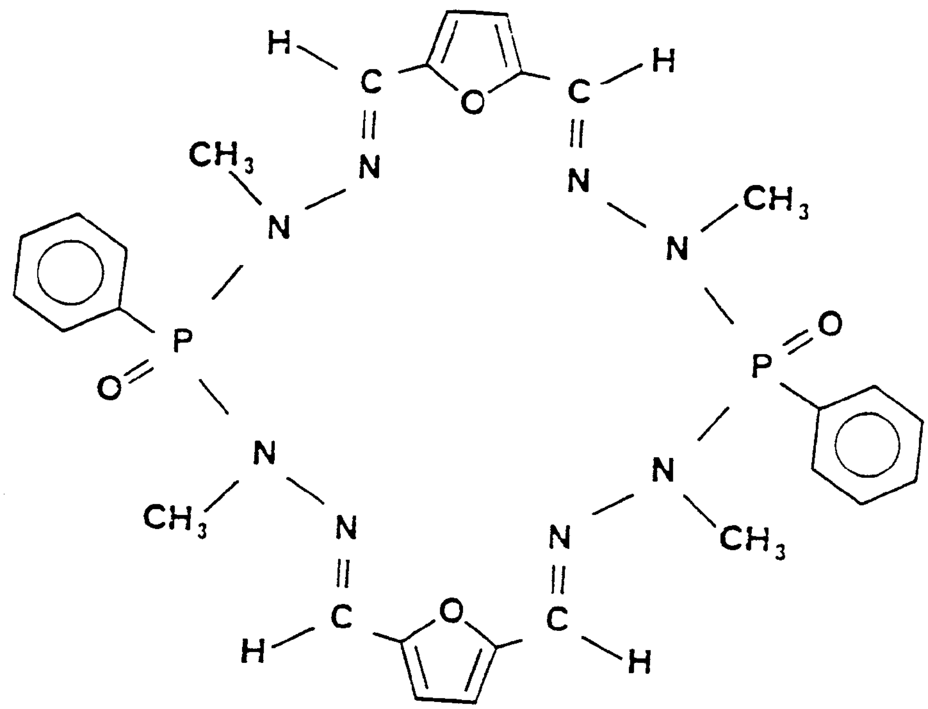

Le rendement est de 85 %. La masse moléculaire est de 604. Le macrocycle possède 20 atomes dans le cycle.

EXEMPLE 6

Même mode opératoire :

- furanne dicarboxaldéhyde 2-5,
- bis (méthylhydrazino) phénoxythiophosphine.

Le macrocycle obtenu présente la structure suivante :

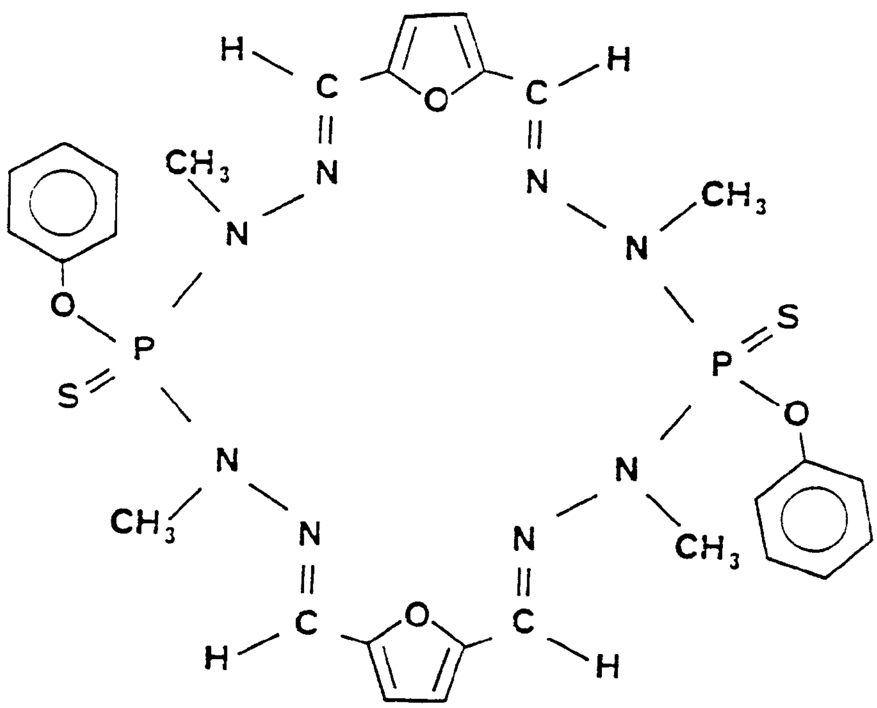

Le rendement est de 80 %. La masse moléculaire est de 668. Le macrocycle possède 20 atomes dans le cycle.

EXEMPLE 7

Synthèse de la bis (méthylhydrazino) phénoxy thiophosphine

Le processus est le même que celui décrit à l'exemple 5, mais on part du sulfure de phénoxy dichlorophosphine : rendement 85 %, point de fusion 58-59°C.

Préparation du macrocycle

Même mode opératoire :

- furanne dicarboxaldéhyde 2-5,
- bis (méthylhydrazino) phénoxy-oxyde de phosphine.

Le macrocycle obtenu présente la structure suivante :

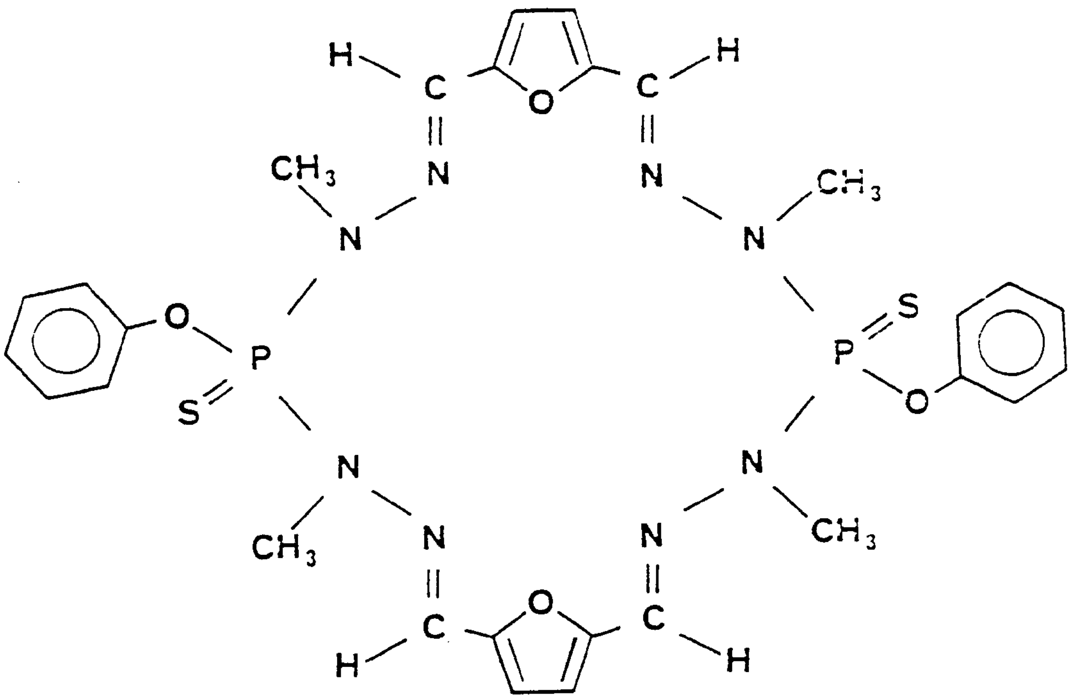

Le rendement est de 88 %. La masse moléculaire est de 636. Le macrocycle possède 20 atomes dans le cycle.

EXEMPLE 8

Synthèse de la bis (méthylhydrazino) diméthylamino oxyde de phosphine

Les processus sont similaires à ceux des exemples 5 et 7, mais on part de l'oxyde de diméthylamino dichlorophosphine : rendement 46 %, point de fusion 73° C.

Préparation du macrocycle

Même mode opératoire :

- furanne dicarboxaldéhyde 2-5,
- bis (méthylhydrazino) diméthylamino-oxyde de phosphine.

Le macrocycle obtenu présente la structure suivante :

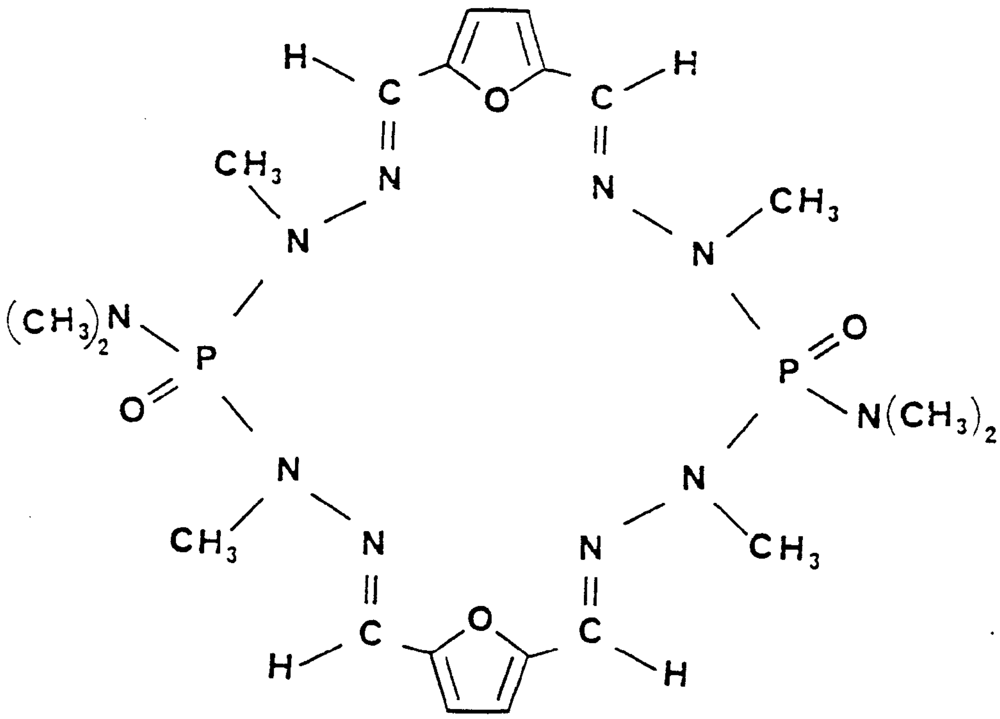

Le rendement est de 82 %. La masse moléculaire est de 538. Le macrocycle possède 20 atomes dans le cycle.

EXEMPLE 9

Complexation de petites molécules

Cet exemple est destiné à mettre en évidence les propriétés remarquables de complexation des macrocycles fabriqués à l'égard des petites molécules.

Le macrocyle fabriqué à l'exemple 3 est mis en présence d'un excès de méthanol (longueur de la molécule de l'ordre de 0,3 nanomètre). Après évaporation complète de la solution et séchage, on obtient une poudre incolore qui est analysée par spectrométrie de masse : on met en évidence la présence d'une molécule complexe constituée par le macrocycle et le méthanol. Il est nécessaire de chauffer cette poudre à 180°C sous $10^{-4}$ pascal pendant 1 heure environ, pour rompre totalement l'association et éliminer le méthanol. Le macrocycle possède donc une très forte tendance à la complexation.

La même constatation peut être faite avec le chloroforme.

EXEMPLE 10

Complexation d'un cation

Le macrocycle fabriqué à l'exemple 5 est dissous dans du chlorométhane et la solution est mise en présence de perchlorate de baryum (1 molécule de perchlorate pour 2 macrocycles). Après évaporation complète et séchage, on obtient une poudre jaune qui est analysée par les méthodes physico-chimiques habituelles (infrarouge, résonance magnétique nucléaire) : on décèle la présence d'une molécule complexe constituée par un atome de baryum lié à deux macrocycles. Le baryum, interposé entre les deux macrocycles, est lié par six liaisons donneur/accepteur à chaque macrocycle.

EXEMPLES 11, 12, 13

Dans ces exemples, on prépare un macrocycle dont la formule générale est la suivante :

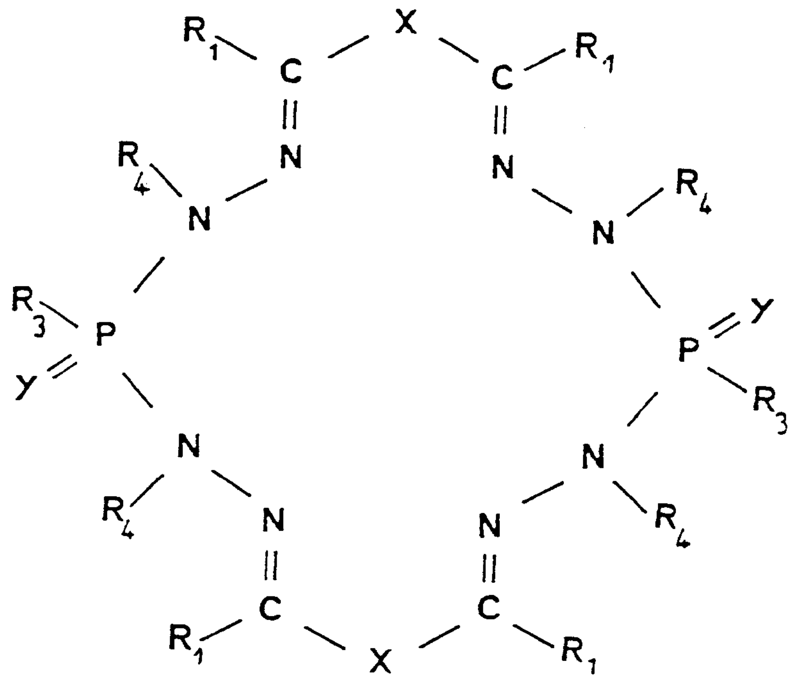

Le mode opératoire est identique à celui des exemples 1 à 8.

EXEMPLE 11

Les radicaux sont les suivants :

X = 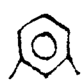 Y = O

$R_3$ = 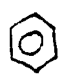 $R_1$ = H

$R_4$ = $CH_3$

Composés de départ :

- phényl dicarboxaldéhyde 1-3,
- bis (méthylhydrazino) phényloxide de phosphine.

Rendement : 80 %

Spectrométrie de masse : 640

Le macrocycle possède 20 atomes dans le cycle.

EXEMPLE 12

X = 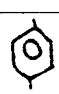 Y = O

$R_3$ = 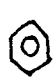 $R_1$ = H

$R_4$ = $CH_3$

- phényl dicarboxaldéhyde 1-4,
- bis (méthylhydrazino) phényloxide de phosphine,
- rendement : 85 %,
- masse : 640.

Le macrocycle possède 22 atomes dans le cycle.

EXEMPLE 13

X = 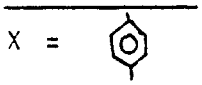

Y = O

$R_3$ = 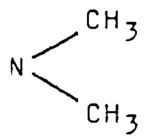

$R_1$ = H

$R_4$ = $CH_3$

- phényl dicarboxaldéhyde 1-4,
- bis (méthylhydrazino) diméthyl amino oxyde de phosphine,
- rendement : 60 %,
- masse : 562.

Le macrocycle possède 22 atomes dans le cycle.

EXEMPLE 14

Complexations de cations

Dans cet exemple, on a réalisé des complexations de baryum ou de plomb au moyen de certains macrocycles fabriqués. La complexation s'effectue soit avec un seul macrocycle comme ligand, soit avec deux macrocycles (complexe sandwich).

Ce mode opératoire a été le suivant : 0,5 g de macrocycle est dissous dans un mélange MeOH/$CHCl_3$ ((1/1) - 15 $cm^3$). On ajoute 1/2 équivalent de perchlorate de baryum (dissous dans le même mélange) ou 1 équivalent de perchlorate de plomb, goutte à goutte et à température ambiante. On maintient l'agitation pendant une heure. Le produit est séparé par simple filtration.

Le tableau ci-dessous résume les résultats obtenus.

| Macrocycle | Métal (perchlorate) | rendem$^t$ de la complexation % | ligand/ métal |
|---|---|---|---|
| Macrocycle de l'exemple 5 | Ba | 30 | 2 ligands /1 |
| Macrocycle de l'exemple 8 | Ba | 75 | 2 ligands /1 |
| Macrocycle de l'exemple 5 | Pb | 70 | 1/1 |
| Macrocycle de l'exemple 8 | Pb | 85 | 1/1 |
| Macrocycle de l'exemple 4 | Pb | 82 | 1/1 |

EXEMPLE 15

Préparation d'un macrocycle avec complexation simultanée

Dans cet exemple, on a illustré la fabrication directe d'un macrocycle complexé par mise en oeuvre du procédé de l'invention en présence d'un sel de baryum en vue d'obtenir un macrocycle fixant le baryum par effet matrice.

Le mode opératoire est le suivant :

. 0,008 mole de dialhédyde,

. 0,008 mole de phosphodihydrazide,

. 0,002 mole de perchlorate de baryum,

sont dissous simultanément au reflux du méthanol (200 $cm^3$). Au bout de 10 minutes, le macrocycle complexé commence à précipiter. On chauffe à reflux pendant 2 heures. Le macrocycle complexé formé est séparé par simple filtration et lavé plusieurs fois avec du méthanol.

Les rendements et apparences du macrocycle complexé sont résumés ci-après. Celui-ci peut être représenté par la formule : $(BaM_2)$ $(C10_4)_2$ où M est le macrocycle.

| M | Rendement % | Apparence |
|---|---|---|
| M = formulation de l'exemple 5 | 80 | orange |
| M = formulation de l'exemple 1 | 85 | rouge |
| M = formulation de l'exemple 12 | 85 | blanc |
| M = formulation de l'exemple 8 | 83 | jaune |

## Revendications

1. Procédé de fabrication de macrocycles organiques phosphorés possédant une chaîne fermée d'au moins 16 atomes, caractérisé en ce qu'il consiste à faire réagir des molécules de phosphohydrazide avec des molécules de dialdéhyde ou de dicétone, dont les fonctions carbonyles sont séparées par au moins un atome de carbone, de formule générale

$$R_1 - \underset{\underset{O}{\|}}{C} - X - \underset{\underset{O}{\|}}{C} - R_2 ,$$

où X est un atome de carbone ou un groupement ou enchaînement carboné, et $R_1$ et $R_2$ un atome d'hydrogène ou un groupement ou enchaînement hydrocarboné, lesdites molécules étant amenées à réagir en les mélangeant dans un solvant apte à dissoudre chacune d'elles, de façon à précipiter des macrocycles comprenant un nombre pair de synthons au moins égal à 4, chaque synthon correspondant à une molécule succédant dans la chaîne à un synthon correspondant à l'autre molécule.

2. Procédé selon la revendication 1, caractérisé en ce que l'on utilise les molécules de phosphodihydrazide suivantes : $R_3P$ (Y) $(NR_4NH_2)_2$, où $R_3$ est un hydrogène ou groupement ou enchaînement hydrocarboné ou azoté, $R_4$ est un hydrogène ou un groupement ou enchaînement hydrocarboné et Y un atome d'oxygène, de soufre, de sélénium, un doublet libre, un métal ou un groupement azoté.

3. Procédé selon la revendication 2, caractérisé en ce que l'on utilise, d'une part, des molécules de dialdéhyde ou de dicétone dans lesquelles X est un groupement choisi parmi les suivants : aryle, furyle, alkyle, phénoxyle, pyridyle, $R_1$ et $R_2$ sont un atome ou un groupement choisi parmi les suivants : hydrogène, aryle, furyle, alkyle, phénoxyle, d'autre part, des molécules de phosphodihydrazide dans lesquelles $R_3$ est un atome ou un groupement choisi parmi les suivants : hydrogène, halogène, aryle, alkyle, furfuryle, amino, hydrazino, et $R_4$ un atome ou un groupement parmi les suivants : hydrogène, alkyle.

4. Procédé selon les revendications 2 et 3 prises ensemble, caractérisé en ce que le mélange des molécules est effectué dans des proportions stoéchiométriques.

5. Procédé selon l'une des revendications 1, 2, 3 ou 4, dans lequel l'on utilise comme solvant du méthanol ou de l'éthanol.

6. Procédé selon l'une des revendications 1, 2, 3, 4 ou 5, caractérisé en ce que le mélange est effectué à température ambiante sous agitation.

7. Procédé selon l'une des revendications 1, 2, 5 ou 6, dans lequel les macrocycles sont isolés par filtration, puis purifiés par recristallisation et séchés.

8. Macrocycle organique phosphoré, caractérisé en ce qu'il possède la structure moléculaire suivante :

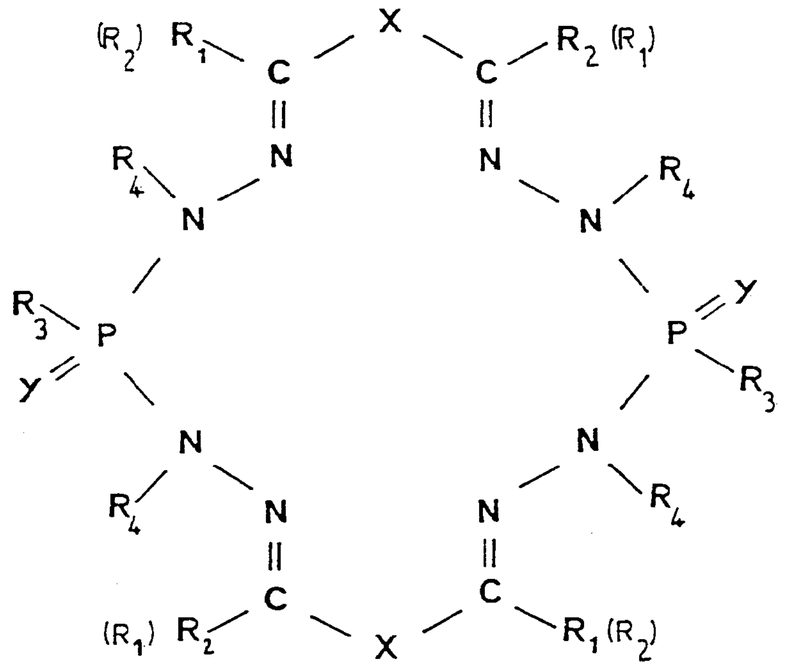

où X est un groupement ou un enchaînement hydrocarboné, $R_1$, $R_2$ et $R_4$ sont un atome d'hydrogène ou un groupement ou enchaînement hydrocarboné, $R_3$ un atome d'hydrogène ou un groupement ou enchaînement hydrocarboné ou azoté, et Y un atome d'oxygène, de soufre, de sélénium, un doublet libre, un métal ou un groupement azoté dans lequel l'azote est doublement lié au phosphore.

9. Macrocycle selon la revendication 8, caractérisé en ce que X est un groupement parmi les suivants : aryle, furyle, alkyle, phénoxyle, pyridyle, $R_1$ et $R_2$ sont un atome ou un groupement parmi les suivants : hydrogène, aryle, furyle, alkyle, phénoxyle, $R_3$ est un atome ou un groupement parmi les suivants : hydrogène, halogène, aryle, alkyle, furfuryle, amino, hydrazino, $R_4$ est un atome ou groupement parmi les suivants : hydrogène, alkyle, et Y un atome d'oxygène ou de soufre.

10. Macrocycle selon la revendication 9, caractérisé en ce qu'il possède la structure moléculaire suivante :

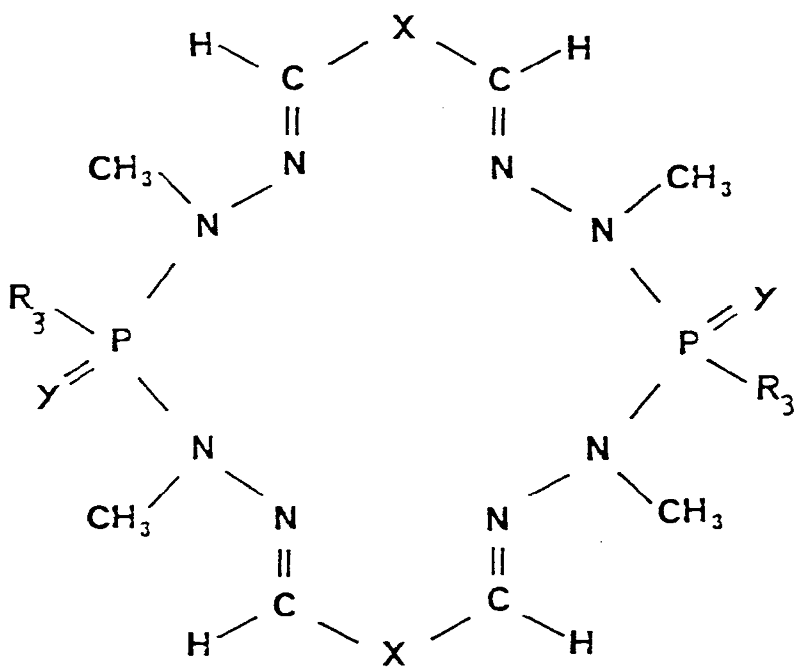

où $R_3$ est un groupement aryle, alkyle, amino ou hydrazino, y est un atome d'oxygène ou de soufre et X est

un groupement : aryle ou furyle.

11. Application du macrocycle conforme à l'une des revendications 8, 9 ou 10, pour piéger de petites molécules de dimensions approximativement comprises entre 0,05 et 5 nanomètres par complexation à partir du macrocycle préalablement fabriqué ou par complexation directe par effet matrice.

12. Application du macrocycle conforme à l'une des revendications 8, 9 ou 10, pour piéger des cations notamment métalliques ou organiques par complexation à partir du macrocycle préalablement fabriqué ou par complexation directe par effet matrice.

## Claims

1. A process for the production of phosphorus-containing organic macrocycles possessing a closed chain of at least 16 atoms, characterized in that it consists in reacting phosphohydrazide molecules with dialdehyde or diketone molecules, the carbonyl groups of which are separated by at least one carbon atom, of the general formula

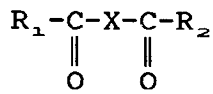

in which X is a carbon atom or a carbon grouping or sequence and $R_1$ and $R_2$ are a hydrogen atom or a hydrocarbon grouping or sequence, said molecules being reacted by being mixed in a solvent capable of dissolving each of them, so as to precipitate macrocycles comprising an even number of synthons equal to at least 4, each synthon corresponding to one molecule following in the chain a synthon corresponding to the other molecule.

2. A process according to Claim 1, characterized in that the following phosphodihydrazide molecules are used: $R_3P(Y)(NR_4NH_2)_2$, in which $R_3$ is a hydrogen or a hydrocarbon or nitrogen-containing grouping or sequence, $R_4$ is a hydrogen or a hydrocarbon grouping or sequence and Y is an oxygen, sulphur or selenium atom, a lone pair, a metal or a nitrogen-containing grouping.

3. A process according to Claim 2, characterized in that, on the one hand, dialdehyde or diketone molecules are used in which X is a grouping selected from the following: aryl, furyl, alkyl, phenoxy and pyridyl, and $R_1$ and $R_2$ are an atom or a grouping selected from the following: hydrogen, aryl, furyl, alkyl and phenoxy, and on the other hand, phosphodihydrazide molecules are used in which $R_3$ is an atom or a grouping selected from the following: hydrogen, halogen, aryl, alkyl, furfuryl, amino and hydrazino, and $R_4$ is an atom or a grouping selected from the following: hydrogen and alkyl.

4. A process according to Claims 2 and 3 jointly, characterized in that the molecules are mixed in stoichiometric proportions.

5. A process according to any one of Claims 1, 2, 3 or 4 in which methanol or ethanol is used as the solvent.

6. A process according to any one of Claims 1, 2, 3, 4 or 5, characterized in that the mixture is prepared at room temperature, with stirring.

7. A process according to any one of Claims 1, 2, 5 or 6 in which the macrocycles are isolated by filtration and then purified by recrystallization and dried.

8. A phosphorus-containing organic macrocycle, characterized in that it possesses the following molecular structure:

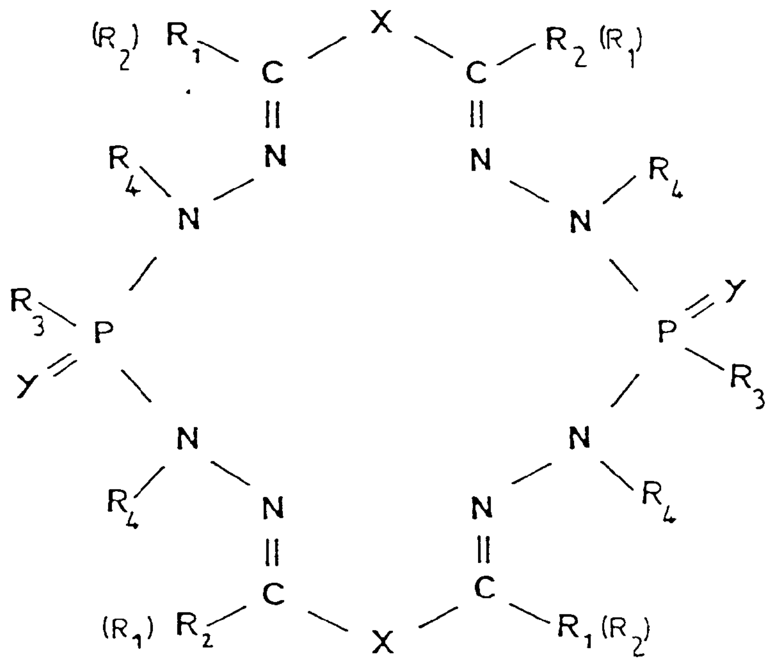

in which X is a hydrocarbon grouping or sequence, $R_1$, $R_2$ and $R_4$ are a hydrogen atom or a hydrocarbon grouping or sequence, $R_3$ is a hydrogen atom or a hydrocarbon or nitrogen-containing grouping or sequence and Y is an oxygen, sulphur or selenium atom, a lone pair, a metal or a nitrogen-containing grouping in which the nitrogen is double-bonded to the phosphorus.

9. A macrocycle according to Claim 8, characterized in that X is a grouping selected from the following: aryl, furyl, alkyl, phenoxy and pyridyl, $R_1$ and $R_2$ are an atom or a grouping selected from the following: hydrogen, aryl, furyl, alkyl and phenoxy, $R_3$ is an atom or a grouping selected from the following: hydrogen, halogen, aryl, alkyl, furfuryl, amino and hydrazino, $R_4$ is an atom or a grouping selected from the following: hydrogen, alkyl, and Y is an oxygen or sulphur atom.

10. A macrocycle according to Claim 9, characterized in that it possesses the following molecular structure:

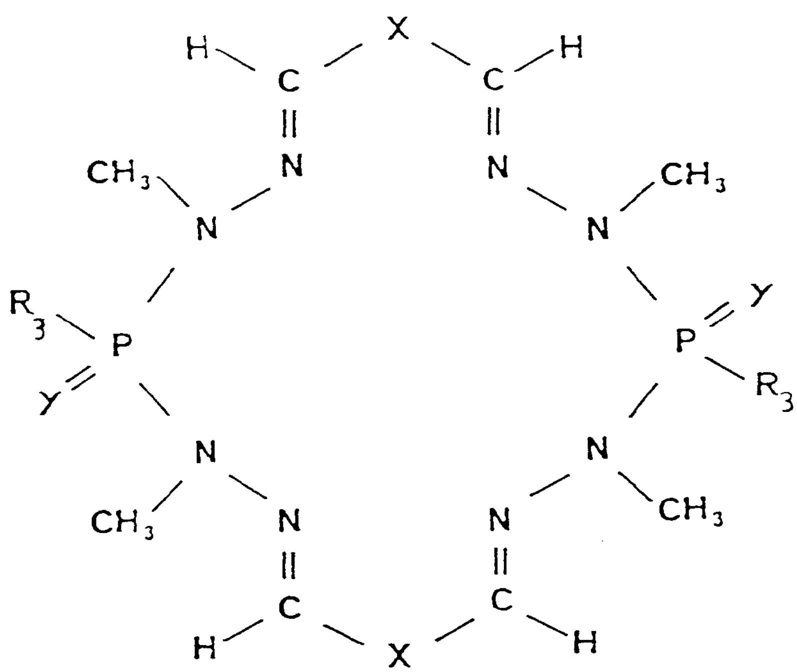

in which $R_3$ is an aryl, alkyl, amino or hydrazino grouping, Y is an oxygen or sulphur atom and X is an aryl or

furyl grouping.

11. Application of the macrocycle according to any one of Claims 8, 9 or 10 for trapping small molecules with approximate dimensions of between 0.05 and 5 nanometres, by complexation starting from the macrocycle produced beforehand or direct complexation by the matrix effect.

12. Application of the macrocycle according to any one of Claims 8, 9 or 10 for trapping especially metal or organic cations by complexation starting from the macrocycle produced beforehand or direct complexation by the matrix effect.

## Patentansprüche

1. Verfahren zur Herstellung von organischen Phosphor-Macroringen mit einer geschlossenen Kette von mindestens 16 Atomen, dadurch gekennzeichnet, daß es darin besteht, Phosphorhydrazidmoleküle mit Dialdehyd- oder Diketonmolekülen, deren Carbonylfunktionen durch mindestens ein Kohlenstoffatom getrennt sind, zur Reaktion zu bringen, mit der allgemeinen Formel

$$R_1 - \underset{\underset{O}{\|}}{C} - X - \underset{\underset{O}{\|}}{C} - R_2 ,$$

in der X ein Kohlenstoffatom oder eine kohlenstoffhaltige Gruppierung oder Verkettung ist und $R_1$ und $R_2$ ein Wasserstoffatom oder eine kohlenwasserstoffhaltige Gruppierung oder Verkettung sind, wobei die besagten Moleküle zur Reaktion gebracht werden, indem man sie in einem zum Auflösen von jedem von ihnen geeigneten Lösungsmittel mischt, so daß eine gerade Anzahl von Synthons - mindestens gleich 4 - umfassende Macroringe gefällt werden, wobei jedes Synthon einem in der Kette auf ein entsprechendes Synthon im anderen Molekül folgenden Molekül entspricht.

2. Verfahren nach Anspruch 1, dadurch gekennzeichnet, daß man von den folgenden Phosphordihydrazidmolekülen Gebrauch macht: $R_3P$ (Y) $(NR_4NH_2)_2$, in dem $R_3$ ein Wasserstoff oder eine kohlenwasserstoff- oder stickstoffhaltige Gruppierung oder Verkettung, $R_4$ ein Wasserstoff oder eine kohlenwasserstoffhaltige Gruppierung oder Verkettung und Y ein Sauerstoff-, Schwefel- oder Selenatom, eine freie Doppelbindung, ein Metall oder eine stickstoffhaltige Gruppierung ist

3. Verfahren nach Anspruch 2, dadurch gekennzeichnet, daß man einerseits von Dialdehyd- oder Diketonmolekülen Gebrauch macht, bei denen X eine Gruppierung aus der Reihe Aryl, Furyl, Alkyl, Phenoxyl , Pyridyl ist und $R_1$ und $R_2$ ein Atom oder eine Gruppierung aus der Reihe Wasserstoff, Aryl, Furyl, Alkyl , Phenoxyl sind, und andererseits von Phosphordihydrazidmolekülen, bei denen $R_3$ ein Atom oder eine Gruppierung aus der Reihe Wasserstoff, Halogen, Aryl, Alkyl, Furfuryl, Amino , Hydrazino und $R_4$ ein Atom oder eine Gruppierung aus der Reihe Wasserstoff, Alkyl ist.

4. Verfahren nach den Ansprüchen 2 und 3 gemeinsam, dadurch gekennzeichnet, daß die Moleküle in stöchiometrischen Proportionen gemischt werden.

5. Verfahren nach einem der Ansprüche 1, 2, 3 oder 4, bei dem man von Methanol oder Äthanol als Lösungsmittel Gebrauch macht.

6. Verfahren nach einem der Ansprüche 1, 2, 3, 4 oder 5, dadurch gekennzeichnet, daß die Mischung unter Rühren bei Umgebungstemperatur bewirkt wird.

7. Verfahren nach einem der Ansprüche 1, 2, 5 oder 6, bei dem die Macroringe durch Filtration getrennt, dann durch Rekristallisation gereinigt und getrocknet werden.

8. Organischer Phosphor-Macroring, dadurch gekennzeichnet, daß er die folgende Molekularstruktur besitzt:

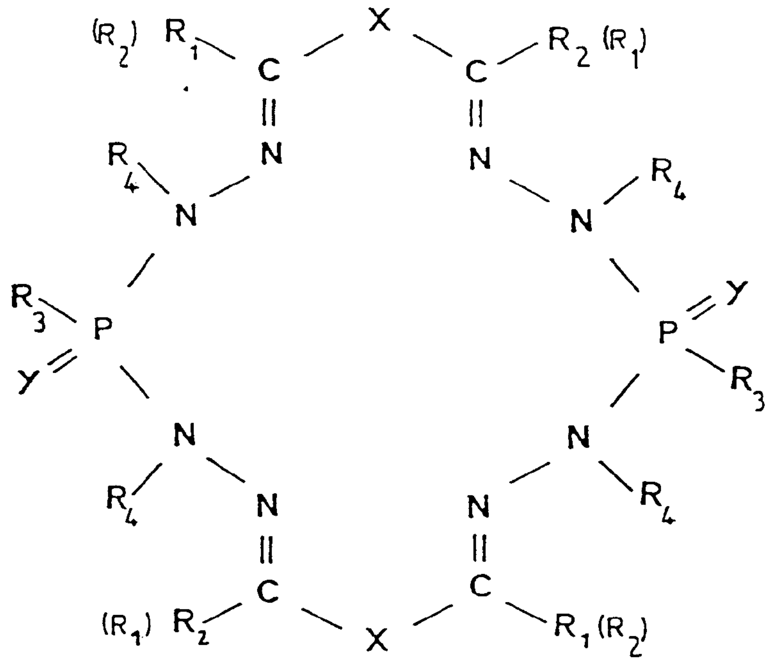

wobei X eine kohlenwasserstoffhaltige Gruppierung oder Verkettung ist, $R_1$, $R_2$ und $R_4$ ein Wasserstoffatom oder eine kohlenwasserstoffhaltige Gruppierung oder Verkettung sind, $R_3$ ein Wasserstoffatom oder eine kohlenwasserstoff- oder stickstoffhaltige Gruppierung oder Verkettung und Y ein Sauerstoff-, Schwefel- oder Selenatom, eine freie Doppelbindung, ein Metall oder eine stickstoffhaltige Gruppierung ist, bei der der Stickstoff doppelt mit dem Phosphor verbunden ist.

9. Macroring nach Anspruch 8, dadurch gekennzeichnet, daß X eine Gruppierung aus der Reihe Aryl, Furyl, Alkyl, Phenoxyl, Pyridyl ist, $R_1$ und $R_2$ ein Atom oder eine Gruppierung aus der Reihe Wasserstoff, Aryl, Furyl, Alkyl , Phenoxyl sind, $R_3$ ein Atom oder eine Gruppierung aus der Reihe Wasserstoff, Halogen, Aryl, Alkyl, Furfuryl, Amino , Hydrazino, $R_4$ ein Atom oder eine Gruppierung aus der Reihe Wasserstoff , Alkyl und Y ein Sauerstoff- oder Schwefelatom ist.

10. Macroring nach Anspruch 9, dadurch gekennzeichnet, daß er die folgende Molekularstruktur besitzt:

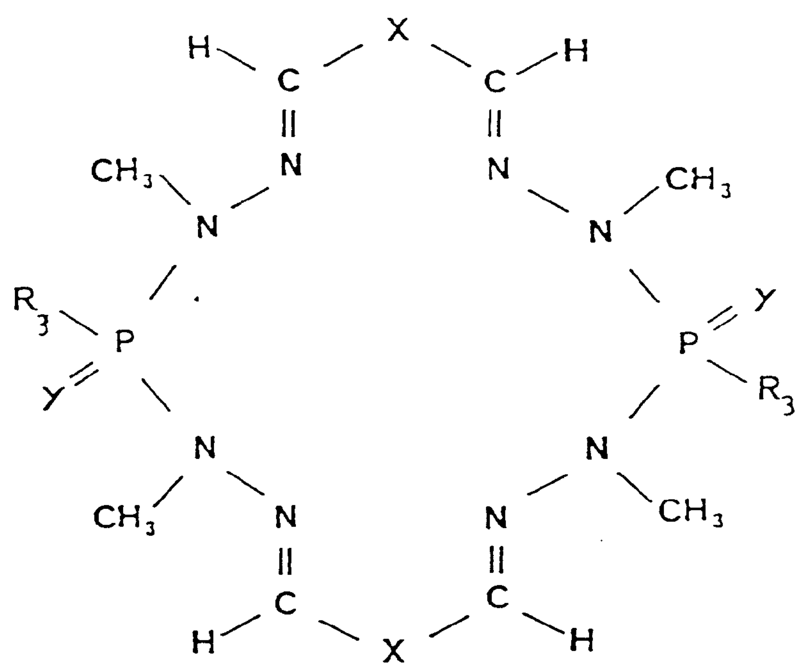

wobei $R_3$ eine Aryl-, Alkyl-, Amino- oder Hydrazinogruppierung, Y ein Sauerstoff- oder Schwefelatom und X eine Aryl- oder Furylgruppierung ist.

11. Anwendung des Macroringes nach einem der Ansprüche 8, 9 oder 10 zum Einfangen kleiner Moleküle mit Maßen annähernd zwischen 0,05 und 5 Nanometern durch Komplexbildung ausgehend von dem zuvor hergestellten Macroring oder durch unmittelbare, durch den Matrixeffekt bedingte Komplexbildung.

12. Anwendung des Macroringes nach einem der Ansprüche 8, 9 oder 10 zum Einfangen von Kationen, insbesondere metallischen oder organischen Kationen, durch Komplexbildung ausgehend von dem zuvor hergestellten Macroring oder durch unmittelbare durch den Matrixeffekt bedingte Komplexbildung.